# EUROPEAN PATENT APPLICATION

(11) **EP 2 127 746 A1**
(43) Date of publication of application: **02.12.2009**
(21) Application number: 07850803.3
(22) Date of filing: 18.12.2007
(51) Int. Cl.: B01J 47/14, B01J 47/02, G01F 23/28

(54) **LIQUID LEVEL CONTROL METHOD OF ION EXCHANGE RESIN COLUMN, ITS LIQUID LEVEL CONTROL SYSTEM AND INTERFACE LEVEL SENSOR**

(30) Priority: 28.02.2007 JP 2007049758
(71) Applicant: Ajinomoto Co., Inc., Tokyo 104-8315 (JP)
(72) Inventor: TOKITA, Yuji, Kawasaki-shi Kanagawa 210-8681 (JP); YAMAMOTO, Ken, Kawasaki-shi Kanagawa 210-8681 (JP); MIKI, Takeshi, Kawasaki-shi Kanagawa 210-8681 (JP); SHIRAISHI, Atsuo, Kawasaki-shi Kanagawa 210-8681 (JP)
(74) Representative: Strehl Schübel-Hopf & Partner
(86) International application number: PCT/JP2007/074317
(87) International publication number: WO 2008/105130

(57) **Abstract**

A liquid surface level control method for an ion-exchange resin tower according to the present invention comprises steps of determining an operation signal (S18, S28, S38) of a discharge device of liquid (6) to be discharged from the ion-exchange resin tower (2a, 2b, 2c), based on a liquid surface level PID operation signal obtained by calculating a liquid surface level signal (S12) in a PID way and a supply flow rate signal (S10, S18, S28) supplied to the ion-exchange resin tower (2a, 2b, 2c), and moving the liquid surface level (6a) close to the target liquid surface level. Preferably, the interface level (4a) is detected by means of an interface level sensor (52), and the target liquid surface level is increased or decreased according to the increase/decrease of the interface level (4a). The interface level sensor (52) includes a plurality of light emitting parts and a plurality of light receiving parts which are opposite to each other in a one-to-one relation.

## Description

### TECHNICAL FIELD

The present invention relates to a liquid surface level control method and a liquid surface level control system, and more specifically to a liquid surface level control method for an ion-exchange resin tower and a liquid surface level control system for an ion-exchange resin tower.

Further, the present invention relates to an interface level sensor for detecting an interface level between an ion-exchange resin layer immersed in a liquid and a liquid layer located on the ion-exchange resin layer.

### BACKGROUND ART

Conventionally, an ion-exchange resin tower has been put into a practical use in a water supply and treatment system and a water condensate treatment system in various types of factories and power plants and otherwise in a wide range of fields for the purpose of removal of a saline and so on in water. Ion-exchange resin is filled from a middle portion to a lower portion in the ion-exchange resin tower, and contact of a liquid supplied into the ion-exchange resin tower with the ion-exchange resin causes an ion (an anion or a cation) in the liquid to be adsorbed to the ion-exchange resin or causes the ion which is adsorbed to the ion-exchange resin to be desorbed therefrom. If the ion-exchange resin is in a state in which it is not immersed in the liquid, the adsorption and desorption performances of the ion-exchange resin are degraded. Conventionally, there are a liquid surface level control system and a liquid surface level control method for controlling a liquid surface level in a liquid layer so that the ion-exchange resin is always immersed in the liquid during an operation of the ion-exchange resin tower.

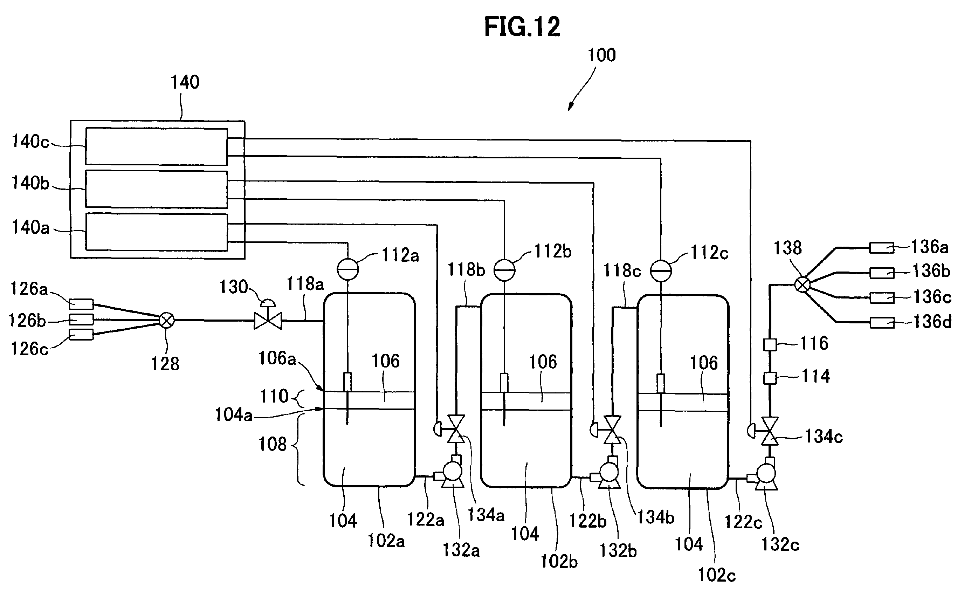

Now, referring to Figure 12, an example of a conventional liquid surface level control system for an ion-exchange resin tower will be explained. Figure 12 is a schematic view of a conventional liquid surface level control system for ion-exchange resin towers.

As shown in Figure 12, a liquid surface level control system 100 for ion-exchange resin towers which is illustratively explained herefrom has three ion-exchange resin towers connected in series, which are a first-stage ion-exchange resin tower 102a, a second-stage ion-exchange resin tower 102b and a third-stage ion-exchange resin tower 102c disposed in order from an upstream side thereof. Ion-exchange resin 104 is filled from a middle portion to a lower portion in each of the ion-exchange resin towers 102a, 102b, 102c, and a liquid 106 acting on the ion-exchange resin 104 is supplied from each of supply lines 118a, 118b, 118c connected to respective upper portions of the ion-exchange resin towers 102a, 102b, 102c so that a layer 108 of the ion-exchange resin 104 immersed in the liquid 106 and a layer 110 of the liquid located on the layer 108 are formed in each of the ion-exchange resin towers 102a, 102b, 102c. A liquid surface level 106a of the liquid 106 is located above an interface level 104a between the ion-exchange resin layer 108 and the liquid layer 110, and is detected by means of liquid surface level sensors 112a, 112b, 112c. Further, the liquid 106 can be discharged through discharge lines 122a, 122b, 122c connected to the respective lower portions of the ion-exchange resin towers 102a, 102b, 102c.

The supply line 118a of the first-stage ion-exchange resin tower is connected to, for example, three liquid supply sources 126a, 126b, 126c via a supply switching valve 128, and has a flow regulating valve 130. The discharge line 122a of the first-stage ion-exchange resin tower 102a is connected to the supply line 118b of the second-stage ion-exchange resin tower 102b via a pump 132a and a valve 134a with an actuator. Similarly, the discharge line 122b of the second-stage ion-exchange resin tower 102b is connected to the supply line 118c of the third-stage ion-exchange resin tower 102b via a pump 132b and a valve 134b with an actuator. The discharge line 122c of the third-stage ion-exchange resin tower 102c is connected through a valve 134c with an actuator, a refractometer 114, and a pH meter 116 to four liquid recovery tanks 136a, 136b, 136c, 136d via a discharge switching valve 138.

The liquid surface level control system 100 also has a liquid surface level controller 140 which includes control modules 140a, 140b, 140c for the respective first-stage, second-stage and third-stage ion-exchange resin towers 102a, 102b, 102c. The liquid surface level sensors 112a, 112b, 112c and the valves 134a, 134b, 134c with actuators of the respective ion-exchange resin towers 102a, 102b, 102c are connected to the respective control modules 140a, 140b, 140c.

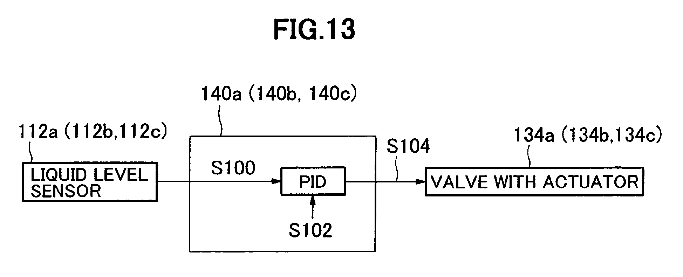

Next, referring to Figure 13, a liquid surface level control method for an ion-exchange resin tower in the liquid surface level control system 100 will be explained. The respective liquid surface level control methods for the ion-exchange resin towers 102a, 102b, 102c are independent relative to each other and similar to each other. Therefore, only the control method for the first-stage ion-exchange resin tower 102c will be explained. Figure 13 is a block diagram of the conventional liquid surface level control method for an ion-exchange resin tower.

In the control module 140a, a PID calculation is performed, an input of the PID calculation being a liquid surface level signal S100 obtained from the liquid surface level sensor 112a, and a target value of the PID calculation being a target liquid surface level signal S102 which is proportional to a target liquid surface level. Then a liquid surface level PID operation signal S104 obtained from the PID calculation is transmitted to the valve 134a with the actuator. Then, by varying an amount of opening of the valve 134a with the actuator based on the liquid surface level PID operation signal S104, a discharge amount of the liquid 106 discharged from the ion-exchange resin tower 102a is varied to move the liquid surface level 106a close to the target liquid surface level. As a result, the ion-exchange resin 104 is always immersed in the liquid 106.

The target liquid surface level is set so as to put the ion-exchange resin 104a in a state in which it is always immersed in the liquid 106 and should be basically set with reference to the interface level 104a between the resin layer 108 and the liquid layer 110. However, since the ion-exchange resin 104 is contracted and swollen due to adsorption and desorption of an anion or a cation, the interface level 104a is raised and lowered in the ion-exchange resin tower 102a. Therefore, in order to set the target liquid surface level with reference to the interface level 104a, an interface level sensor for measuring the interface level 104a is required. Conventionally, a color sensor (for example, please refer to Patent Publication 1) and a light reflective sensor (for example, please refer to Patent Publication 2) have been known for measuring the interface level 104a. However, since an anion solution or a cation solution has a color similar to that of the ion-exchange resin (for example, amber), even if the color sensor or the light reflective sensor is used, the interface level 104a cannot actually be measured accurately. Therefore, in the above-stated liquid surface level control method, the target liquid surface level has been set with reference to the ion-exchange resin tower 102a based on the experiences of an operator of the liquid control system 100.

Patent Publication 1: Japanese Patent Laid-open Publication No. 5-115799 (paragraph 0021)
Patent Publication 2: Japanese Patent Laid-open Publication No. 8-192072 (paragraph [0014])

### SUMMARY OF THE INVENTION

When the ion-exchange resin towers 102a, 102b, 102c are operated by using the above-stated liquid surface level control method, the liquid surface level 106a is usually oscillated within a range of about ±10-30 centimeters with respect to the target liquid surface level. Further, in the ion-exchange resin towers 102a, 102b, 102c, an amplitude of the liquid surface level 106a increases as one goes downstream or toward the ion-exchange resin towers 102b, 102c. Therefore, the operator takes into consideration the oscillation of the liquid surface level 106a and thus sets the target liquid surface level much higher than a predicted interface level 104a.

Further, as stated before, since the interface level 104a is lowered and raised in the ion-exchange resin towers 102a, 102b, 102c, the operator takes into consideration the extent of the up and down of the interface level 104a so that he/she sets the target liquid surface level very high.

As a result, the target liquid surface level becomes much higher than the interface level 104a, causing a process time of each of the ion-exchange resin towers 102a, 102b, 102c in the liquid control system 100 to become long. A concrete example in which a purified amino acid solution is extracted from an unpurified amino acid solution will be illustratively explained.

When the ion-exchange resin towers 102a, 102b, 102c are used for extracting the purified amino acid solution from the unpurified amino acid solution, the liquids 106 are the unpurified amino acid solution, water, an eluting agent, and water and are supplied into the ion-exchange resin towers 102a, 102b, 102c in order. In a first process, the unpurified amino acid solution is supplied from the supply source 126a thereof into the ion-exchange resin towers 102a, 102b, 102c. An amino acid in the unpurified amino acid solution is adsorbed to the ion-exchange resin 104 in each of the ion-exchange resin towers 102a, 102b, and 102c. By the unpurified amino acid solution, the liquid such as water previously present in each of the ion-exchange resin towers 102a, 102b, 102c is pushed out and recovered into the liquid recovery tank 136a.

In a second process, the supply switching valve 128 is switched so that water is supplied from the supply source 126b thereof into the ion-exchange resin towers 102a, 102b, 102c. By the water, the unpurified amino acid solution is pushed out from the ion-exchange resin towers 102a, 102b. Since a solution (a flow-through solution) caused by removing the amino acid from the unpurified amino acid solution is pushed out from the ion-exchange resin tower 102c, the discharge switching valve 138 is switched so that the flow-through solution is recovered into the liquid recovery tank 136c.

In a third process, the supply switching valve 129 is switched so that the eluting agent is supplied from the supply source 126c thereof into the ion-exchange resin towers 102a, 102b, 102c. By the eluting agent, the water is pushed out from the ion-exchange resin towers 102a, 102b, 102c. The eluting agent in the ion-exchange resin towers 102a, 102b, 102c causes the amino acid adsorbed to the ion-exchange resin 104 to be desorbed, and thus causes the amino acid to be resolved into the eluting agent. Hereinafter, the eluting agent in which the amino acid is resolved is referred to as an eluting liquid.

In a fourth process, the supply switching valve 128 is switched so that the water is supplied from the supply source 126b thereof into the ion-exchange resin towers 102a, 102b, 102c. The eluting liquid including the amino acid is pushed out from the ion-exchange resin towers 102a, 102b, 102c. Then, the discharge switching valve 138 is switched so that the pushed-out eluting liquid is recovered into the liquid recovery tank 136b. As a result, the purified amino acid solution which does not include impurities can be extracted from the eluting liquid.

In the above-stated adsorption process (the first process) and the eluting process (the third process), when the unpurified amino acid solution or the eluting agent starts to be supplied into the ion-exchange resin tower 102a, 102b, 102c, since the liquid surface level 106a is much higher than the interface level, an amount of the water occupying the liquid layer 110 in the ion-exchange resin tower 102a, 102b, 102c is increased. Thus, when the unpurified amino acid solution or the eluting agent starts to be supplied, the unpurified amino acid solution or the eluting agent is mixed with water in the liquid layer 110 so that the unpurified amino acid solution or the eluting agent is diluted. Similarly, in the second process and the fourth process, when the water starts to be supplied, since the liquid surface level 106a is much higher than the interface level, an amount of the unpurified amino acid solution or the eluting agent occupying the liquid layer 110 in the ion-exchange resin tower 102a, 102b, 102c is increased. Thus, when the water starts to be supplied, the water is mixed with the unpurified amino acid solution or the eluting agent in the liquid layer 110 so that the unpurified amino acid solution or the eluting agent is diluted. As a result, a load in a condensation process following these processes becomes great.

Further, since the unpurified amino acid solution or the eluting agent is diluted, a time required for adsorption and desorption of the amino acid in the ion-exchange resin towers 102a, 102b, 102c is increased so that a process time becomes long.

Further, since the amounts of the pushed-out water and the pushing water are increased, the process time in the ion-exchange resin tower 102a, 102b, 102c becomes long.

Further, it is considered that if the interface level 104a is measured, the liquid surface level 106a could be controlled so as to come close to the interface level 104a so that the process time could be reduced.

Thus, it is an object of the present invention to provide a liquid surface level control method for an ion-exchange resin tower and a liquid surface level control system for an ion-exchange resin tower which are capable of reducing a process time of the ion-exchange resin tower.

It is also an object of the present invention to provide a liquid surface level control method for an ion-exchange resin tower and a liquid surface level control system for an ion-exchange resin tower which are capable of restricting a liquid in the ion-exchange resin tower from being diluted.

Further it is an object of the present invention to provide an interface level sensor which is capable of detecting an interface level between a liquid layer and an ion-exchange resin layer.

In order to achieve the above-stated object, a liquid surface level control method of controlling a liquid surface level in at least one ion-exchange resin tower according to the present invention comprises the steps of: supplying a liquid into an ion-exchange resin tower through an upper portion thereof by a supply device; and discharging the liquid from a lower portion of the ion-exchange resin tower by a discharge device so that a liquid surface level of a liquid layer located on an ion-exchange resin layer in the ion-exchange resin tower comes close to a target liquid surface level; the discharging step comprising steps of obtaining a liquid surface level signal corresponding to the liquid surface level by a liquid surface level sensor; performing a PID calculation to obtain a liquid surface level PID operation signal, an input of the PID calculation being the liquid surface level signal, and a target value of the PID calculation being a target liquid surface level; obtaining a supply flow rate signal corresponding to a supply flow rate of the liquid supplied into the ion-exchange resin tower by the supply device; determining an operation signal of the discharge device corresponding to a discharge amount of the liquid to be discharged from the ion-exchange resin tower by the discharge device based on the liquid surface level PID operation signal and the supply flow rate signal; and operating the discharge device based on the operation signal of the discharge device.

In this liquid surface level control method, the operation signal of the discharge device is determined by using the liquid surface level PID operation signal and the supply flow rate signal. This liquid surface level control method allows the liquid surface level to be stabilized much more than in the case of the conventional liquid surface level control method in which the operation signal of the discharge device is determined by using only the liquid surface level PID operation signal. Specifically, when the liquid is discharged by the discharge device, the liquid surface level is lowered. However, the liquid surface level does not quickly change in response to a discharge amount of the liquid discharged by the discharge device due to a resistance of the ion-exchange resin layer located under the liquid layer. Although this delay in the above response causes an oscillation of the liquid surface level, this oscillation can be reduced by using the supply flow rate signal.

Reduction of the oscillation of the liquid surface level allows the target liquid surface level set by an operator to come closer to the interface level than that set based on the conventional method. As a result, an amount of the liquid (the next liquid) required for pushing the liquid (the previous liquid) which is previously present inside the ion-exchange resin tower can be reduced so that the process time for the ion-exchange resin tower can be reduced. Further, for example, when the unpurified amino acid solution or the eluting agent is supplied into the ion-exchange resin tower after the water is supplied thereinto, since the amount of the water which is present above the interface level inside the ion-exchange resin tower is reduced, the unpurified amino acid solution or the eluting agent is restricted from being diluted and the process time can be reduced.

In the liquid surface level control method level according to the present invention, preferably, the at least one ion-exchange resin tower includes a first-stage ion-exchange resin tower and a second-stage ion-exchange resin tower which are connected in series, the discharge device of the first-stage ion-exchange resin tower is the supply device of the second-stage ion-exchange resin tower, and the step of obtaining the supply flow rate signal in the second-stage ion-exchange resin tower is the same as the step of obtaining the operation signal of the discharge device determined in the first-stage ion-exchange resin tower.

In this liquid surface level control method, the oscillation of the liquid surface level in the second-stage ion-exchange resin tower on the downstream side is allowed to be equal to that of the liquid surface level in the first-stage ion-exchange resin tower on the upstream side. As a result, a process time can be reduced in all of the ion-exchange resin towers employing the liquid control method according to the present invention. Further, for example, when the unpurified amino acid solution or the eluting agent is supplied into the ion-exchange resin tower after the water is supplied into the ion-exchange resin tower, since an amount of the water which is present above the interface level inside the ion-exchange resin tower is decreased, the unpurified amino acid solution or the eluting agent is restricted to be diluted and the process time can be reduced.

In the liquid surface level control method according to the present invention, preferably, the discharging step further includes the steps of obtaining an interface level signal corresponding to an interface level between the ion-exchange resin layer and the liquid layer by means of an interface level sensor; and increasing and decreasing the target liquid surface level according to an increase and decrease of the interface level signal, respectively.

In this liquid surface level control method, since the target liquid surface level is increased and decreased according to the interface level which is raised and lowered in the ion-exchange resin tower, respectively, an operator is allowed to set the target liquid surface level with reference to the interface level so that the target liquid surface level can come close to the interface level. As a result, an amount of the pushing liquid (the next liquid) required for pushing out the liquid (the previous liquid or pushed-out liquid) inside the ion-exchange resin tower can be greatly reduced, and the process time of the ion-exchange resin tower can be greatly reduced. Further, for example, when the eluting agent is supplied into the ion-exchange resin tower after the water is supplied into the ion-exchange resin tower, since an amount of the water which is present above the interface level inside the ion-exchange resin tower is greatly reduced, the eluting agent is restricted to be diluted and the process time can be reduced.

In order to achieve the above-stated object, a liquid surface level control system for controlling a liquid surface level in an ion-exchange resin tower according to the present invention comprises at least one ion-exchange resin tower; an ion-exchange resin layer disposed in the ion-exchange resin tower; a liquid layer formed on the ion-exchange resin layer by a liquid supplied into the ion-exchange resin tower so as to immerse the ion-exchange resin layer; a liquid surface level sensor for detecting a liquid surface level of the liquid layer; a supply device connected to an upper portion of the ion-exchange resin tower for supplying the liquid into the ion-exchange resin tower; a discharge device connected to a lower portion of the ion-exchange resin tower for discharging the liquid from the ion-exchange resin tower; and a liquid surface level controller connected to the liquid surface level sensor, the supply device, and the discharge device, wherein the liquid controller obtains a supply flow rate signal corresponding to a supply flow rate of the liquid supplied into the ion-exchange resin tower based on a signal received from the supply device; performs a PID calculation to obtain a liquid surface level PID operation signal, an input of the PID calculation being a signal of the liquid surface level detected by the liquid surface level sensor, and a target value of the PID calculation being a target liquid surface level; determines an operation signal of the discharge device corresponding to a discharge amount of the liquid to be discharged from the discharge device based on the liquid surface level PID operation signal and the supply flow rate signal; and operates the discharge device based on the operation signal of the discharge device.

The liquid surface level control system according to the present invention, preferably, further comprises an interface level sensor for detecting an interface level between the ion-exchange resin layer and the liquid layer, wherein the liquid controller further obtains an interface level signal corresponding to the interface level, and increases and decreases the target liquid surface level according to an increase and decrease of the interface level signal, respectively.

In order to achieve the above-stated object, an interface level sensor for detecting an interface level between an ion-exchange resin layer immersed in a liquid and a liquid layer located on the ion-exchange resin layer according to the present invention comprises two tubular bodies extending through the liquid layer into the ion-exchange resin layer, the tubular bodies being sealed at their lower portions spaced from each other, and made of a material with a light transmittance property, a plurality of light emitting parts arranged in a vertical direction inside one of the tubular bodies; a plurality of light receiving parts arranged in a vertical direction inside the other of the tubular bodies, said light receiving parts being opposed to said light emitting parts in a one-to-one relation so that lights emitted from said light emitting parts enter said respective light receiving parts; and a sensor controller connected to said light emitting parts and said light receiving parts, wherein said control sensor determines which space between the adjacent light emitting parts/light receiving parts the interface level is located in.

In this interface level sensor, light emitted from the light emitting part located below the interface level does not arrive at the light receiving part, while light emitted from the light emitting part located above the interface level arrives at the light receiving part. Then, it can be found that there is an interface level between the light receiving parts which receive the lights and the light receiving parts which do not receive the lights. Thus, the interface level can be measured.

The interface level sensor according to the present invention, preferably, further comprises an outer tubular body arranged around the tubular bodies, the outer tubular body including a window through which a light passes, the light being emitted from the light emitting part and received by the light receiving part.

As explained above, in the liquid surface level control method for the ion-exchange resin tower according to the present invention and the ion-exchange tower in which said liquid surface level control method is employed, a process time for the ion-exchange resin tower can be reduced. Further, the liquid surface level control system for the ion-exchange resin tower according to the present invention allows a process time therefor to be reduced.

Further, the liquid surface level control method and the liquid surface level control system for the ion-exchange resin tower according to the present invention can restrict a liquid in an ion-exchange resin tower from being diluted.

Further, the interface level sensor according to the present invention allows an interface level between an ion-exchange resin layer immersed in a liquid and a liquid layer located on the ion-exchange resin layer to be detected.

### DETAILED DESCRIPTION OF THE PREFERRED EMBODIMENTS

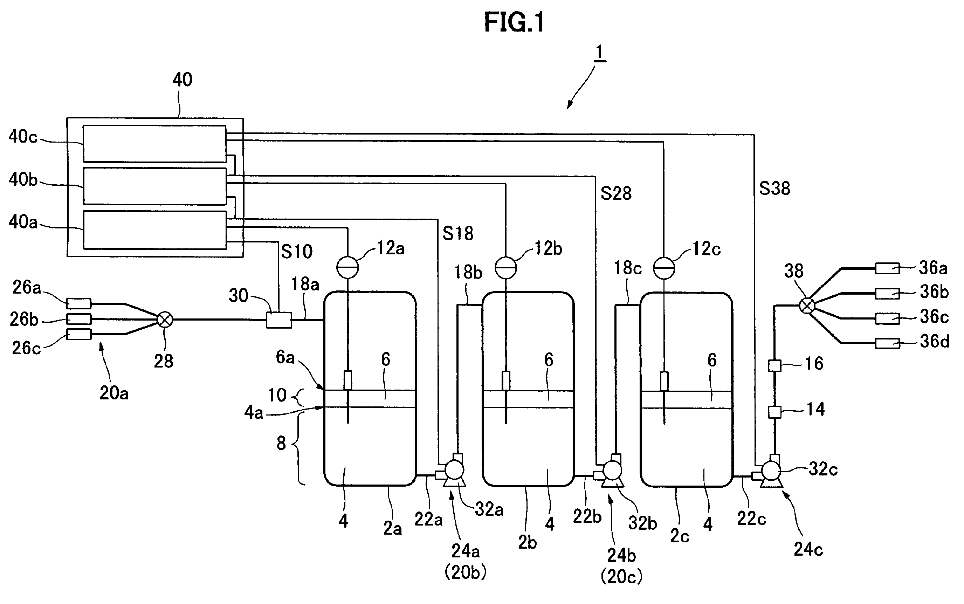

Firstly, referring to Figure 1, a first embodiment of a liquid surface level control system for an ion-exchange resin tower according to the present invention will be explained. Figure 1 is a schematic view showing a liquid surface level control system for ion-exchange resin towers, which is the first embodiment of the present invention.

As shown in Figure 1, a liquid surface level control system 1 for ion-exchange resin towers, which is the first embodiment of the present invention, has three ion-exchange resin towers connected in series, which are a first-stage ion-exchange resin tower 2a, a second-stage ion-exchange resin tower 2b and a third-stage ion-exchange resin tower 2c disposed in order from an upstream side. In this embodiment, the liquid surface level control system 1 for the ion-exchange resin towers will be exemplarily explained, assuming that it is used for an application of separating and extracting a purified amino acid solution from an unpurified amino acid solution.

Each of the ion-exchange resin towers 2a, 2b, 2c has ion-exchange resin 4 disposed from a middle portion of the ion-exchange resin tower to a lower portion thereof, and a liquid 6 put into the ion-exchange resin tower up to a liquid surface level 6a above the ion-exchange resin 4 in the ion-exchange resin tower. That is, in each of the ion-exchange resin towers 2a, 2b, 2c, an ion-exchange resin layer 8 in which the ion-exchange resin 4 and the liquid 6 are mixed with each other is formed, and a liquid layer 10 constituted of only the liquid and located on the ion-exchange resin layer 8 is formed, and thus an interface is defined between the ion-exchange resin layer 8 and the liquid layer 10. A level of this interface is referred to as an interface level 4a. Generally, the ion-exchange resin 4 is classified as cation-exchange resin which is capable of adsorbing cation and anion-exchange resin which is capable of adsorbing anion, and is in a form of a bead, for example, "Amberlite (Registered Trademark)" IRA Series (Rohm and Haas Company), "Dunalite (Registered Trademark)" A300 Series (Dunalite Company), and "Diaion (Registered Trademark)" WA Series (Mitsubishi Chemical Corporation). The ion-exchange resin used for separating and extracting the purified amino acid solution is preferably that capable of adsorbing cation, for example, "Diaion (Registered Trademark) SK-Series" (Mitsubishi Chemical Corporation)", "Duolite C-Series" (Sumitomo Chemtex Co., Ltd.) and "Lewatit (Registered Trademark) S-series" (LANXESS Corporation). Further, in the present embodiment, three kinds of the liquids are used, the liquid being an unpurified amino acid solution (undiluted amino acid solution), water and an eluting agent. The unpurified amino acid solution is an amino acid solution which contains impurities and is manufactured, for example, by means of a fermentation method or an enzyme method, the unpurified amino acid solution including a liquid obtained by removing solid impurities such as a fermentation fungus body from a fermentation liquid by means of a centrifugal separation, a filtration, a coagulation sedimentation and so on, and a crystallization mother liquid obtained after a target amino acid is separated and taken from a fermentation liquid by means of a pH adjustment method (an isoelectric point crystallization method) and so on. Concretely, the unpurified amino acid solution is a liquid for industrially producing an amino acid such as a lysine, an arginine, a glutamine, a histidine, an isoleucine, a proline, a threonine, a serine, and a valine. The eluting agent may be generally an acid solution or an alkaline solution, the acid solution being, for example, a hydrochloric solution or an acetic acid solution, the alkaline solution being, for example, a sodium hydroxide solution or an ammonium hydroxide solution, the eluant being the alkaline solution in the present embodiment.

The ion-exchange resin towers 2a, 2b, 2c respectively have supply device 20a, 20b, 20c connected to upper portions of the ion-exchange resin towers 2a, 2b, 2c via supply lines 18a, 18b, 18c for supplying the liquid 6 into the ion-exchange resin towers 2a, 2b, 2c, and discharge devices 24a, 24b, 24c connected to lower portions of the ion-exchange resin towers 2a, 2b, 2c via discharge lines 22a, 22b, 22c for discharging the liquid 6 from the ion-exchange resin towers 2a, 2b, 2c.

The ion-exchange resin towers 2a, 2b, 2c respectively have liquid surface level sensors 12a, 12b, 12c for detecting the liquid surface level 6a. The liquid surface level sensors 12a, 12b, 12c are, for example, a float type sensor (for example, "GY cRp-3000" manufactured by the Santest Co. Ltd.). The discharge line 22c of the third-stage ion-exchange resin tower 2c is provided with a refractometer 14 and a pH meter 16 for respectively measuring a refractive index and a pH of the liquid discharged from the ion-exchange resin towers 2a, 2b, 2c. The type of the refractometer 14 is, for example, "PRM-75" manufactured by Atago Co. Ltd., and the type of the pH meter 16 is, for example, "HDM-136" manufactured by DKK Toa Corporation.

The supply device 20a of the first-stage ion-exchange resin tower 2a has three liquid supply sources 26a, 26b, 26c corresponding to the three kinds of liquids, a supply switching valve 28 by means of which the liquid supply sources 26 and the supply line 18a are switchably connected to each other, and a flowmeter 30 located downstream of the supply switching valve 28. The flowmeter 30 generates a supply flow rate signal S10 having a relation to (for example, being in proportion to) a supply flow rate of the liquid 6 supplied into the first-stage ion-exchange resin tower 2a.

The discharge line 22a of the first-stage ion-exchange resin tower 2a is connected to the supply line 18b of the second-stage ion-exchange resin tower 2b. In the present embodiment, the discharge device 24a of the first-stage ion-exchange resin tower 2a is the supply device 20b of the second-stage ion-exchange resin tower 2b, and constituted by a pump 32a. The pump 32a is operated through an operation signal S18 of the discharge device corresponding to a discharge amount of the liquid 6 discharged from the first-stage ion-exchange resin tower 2a, for example, a rotational speed indication signal which indicates a rotational speed of the pump 32a.

Similarly, the discharge line 22b of the second-stage ion-exchange resin tower 2b is connected to the supply line 18c of the third-stage ion-exchange resin tower 2c. In the present embodiment, the discharge device 24b of the second-stage ion-exchange resin tower 2b is the supply device 20c of the third-stage ion-exchange resin tower 2c, and constituted by a pump 32b. The pump 32b is operated through an operation signal S28 of the discharge device corresponding to a discharge amount of the liquid 6 discharged from the second-stage ion-exchange resin tower 2b, for example, a rotational speed indication signal which indicates a rotational speed of the pump 32b.

The discharge line 22c of the third-stage ion-exchange resin tower 2c is connected to four liquid recovery tanks 36a, 36b, 36c, 36d via a pump 32c and a discharge switching valve 38, the discharge switching valve 38 switchably connecting the pump 32c with the liquid recovery tanks 36a, 36b, 36c, 36d. The pump 32c is operated through an operation signal S38 of the discharge device corresponding to a discharge amount of the liquid 6 discharged from the third-stage ion-exchange resin tower 2c, for example, a rotational speed indication signal which indicates a rotational speed of the pump 32c.

The liquid surface level control system for the ion-exchange resin towers has a liquid surface level controller 40 including control modules 40a, 40b, 40c for the first-stage, second-stage and third-stage ion-exchange resin towers 2a, 2b, 2c. The control modules 40a, 40b, 40c are connected to the respective liquid surface level sensors 12a, 12b, 12c and the respective pumps 32a, 32b, 32c of the respective ion-exchange resin towers 2a, 2b, 2c. Further, the flowmeter 30 is connected to the control module 40a, the pump 32a is connected to the control module 40b, and the pump 32b is connected to the control module 40c. Further, the refractometer 14, the pH meter 16, the supply switching valve 28 and the discharge switching valve 38 are connected to, for example, a controller (not shown) for controlling all of the ion-exchange resin towers.

Next, an operation of the liquid surface level control system for the ion-exchange resin towers which is the first embodiment according to the present invention will be explained.

In the first-stage ion-exchange resin tower 2a, the liquid 6 is supplied from the supply source 20a via the supply line 18a into the resin tower 2a, and then discharged therefrom via the discharge line 22a by the pump 32a. In the second-stage ion-exchange resin tower 2b, the liquid 6 is supplied via the supply line 18b into the resin tower 2b by the pump 32a, and then discharged therefrom via the discharge line 22b by the pump 32b. In the third-stage ion-exchange resin tower 2c, the liquid 6 is supplied via the supply line 18c into the resin tower 2c by the pump 32b, and then discharged therefrom to the liquid recovery tanks 36a, 36b, 36c, 36d via the discharge line 22c by the pump 32c. Thus, the liquid 6 flows from the supply sources 26a, 26b, 26c through the first-stage, second-stage and third-stage ion-exchange resin towers 2a, 2b, 2c in order into the liquid recovery tanks 36a, 36b, 36c, 36d. As explained in detail later, the pumps 32a, 32b, 32c are controlled so that the liquid surface level 6a in each of the ion-exchange resin towers 2a, 2b, 2c comes close to a target liquid surface level.

In detail, firstly, the supply switching valve 28 is switched so that an unpurified amino acid solution is supplied from the supply source 26a thereof. Then the liquid 6 such as water inside the ion-exchange resin towers 2a, 2b, 2c is replaced with the unpurified amino acid solution from the first-stage ion-exchange resin tower 2a to the third-stage ion-exchange resin tower 2c in order. Then, the discharge switching valve 38 is switched so that the replaced liquid 6 such as water is discharged from the third-stage ion-exchange resin tower 2c and recovered into the liquid recovery tank 36a. By contacting the unpurified amino acid solution with the ion-exchange resin 4, the amino acid is adsorbed to the ion-exchange resin 4. In the beginning, the ion-exchange resin 4 to which the amino acid is adsorbed is mainly that in the first-stage ion-exchange resin tower 2a. After the amino acid cannot be adsorbed any longer to the ion-exchange resin 4 in the first-stage ion-exchange resin tower 2a, the ion-exchange resin 4 to which the amino acid is adsorbed is shifted in the downstream direction in order, namely, shifted to the ion-exchange resin 4 in the ion-exchange resin towers 2b, 2c. When the amino acid is adsorbed to the ion-exchange resin 4, an impurity such as a sulfate radical contained in the unpurified amino acid solution remains therein. After an amount of the unpurified amino acid solution is supplied, the amount being predetermined taking into consideration an amount of the amino acid which can be adsorbed to the ion-exchange resin 4, the supply of the unpurified amino acid solution is terminated.

Next, the supply switching valve 28 is switched so that the water is supplied from the supply source 26b. Then, the unpurified amino acid solution inside the ion-exchange resin towers 2a, 2b, 2c is replaced with the water from the first-stage ion-exchange resin tower 2a to the third-stage ion-exchange resin tower 2c in order. Further, the replaced liquid which is a flow-through water (a remaining liquid after an amino acid in the unpurified amino acid solution is adsorbed to the ion-exchange resin) is discharged from the third-stage ion-exchange resin tower 2c and recovered into the liquid recovery tank 36c. The flow-through water discharged from the ion-exchange resin tower 2c contains little amino acid. By discharging the flow-through water from the ion-exchange resin towers 2a, 2b, 2c, the impurities contained in the unpurified amino acid solution are flushed out of the ion-exchange resin towers 2a, 2b, 2c. After an amount of water is supplied, the amount being previously determined based on a test for causing the impurities to be completely flushed, the supply of water is terminated.

Next, the supply switching valve 28 is switched so that the eluting agent is supplied from the supply source 26c thereof. Then, the water inside the ion-exchange resin towers 2a, 2b, 2c is replaced with the eluting agent from the first-stage ion-exchange resin tower 2a to the third-stage ion-exchange resin tower 2c in order. Further, the replaced water is discharged from the third-stage ion-exchange resin tower 2c and recovered into the liquid recovery tank 36a. By contacting the eluting agent with the ion-exchange resin 4, the amino acid adsorbed to the ion-exchange resin 4 is desorbed therefrom, and then merged into the eluting agent. In this specification, the eluting agent into which the amino acid is merged is referred to as an eluting liquid.

After the water inside the ion-exchange resin towers 2a, 2b, 2c is replaced with the eluting agent, the eluting liquid into which the amino acid is merged is discharge from the third-stage ion-exchange resin towers 2c. When the eluting liquid starts to be discharged from the third-stage ion-exchange resin tower 2c, a value of refractive index indicated by the refractometer 14 which is disposed at the discharge line 22c of the third-stage ion-exchange resin tower 2c increases. When the value of refractive index starts to increase, the discharge switching valve 38 is switched so that the eluting liquid is recovered into the liquid recovery tank 36b. After an amount of the eluting agent is supplied, the amount being previously determined so that whole amino acid adsorbed to the ion-exchange resin 4 is completely desorbed, the supply of eluting agent is terminated.

Finally, the supply switching valve 28 is switched so that the water is supplied from the supply source 26b thereof. Then, the eluting liquid inside the ion-exchange resin towers 2a, 2b, 2c is replaced with the water from the first-stage ion-exchange resin tower 2a to the third-stage ion-exchange resin tower 2c in order. For a while after the supply of the water is started, the eluting liquid that remains in the third-stage ion-exchange resin tower 2c is discharged therefrom. Usually, since an excess amount of the eluting agent is supplied, when the eluting agent into which the amino acid is not merged starts to be discharged, the discharge switching valve 38 is switched so that the eluting agent is recovered into the liquid recovery tank 36d. When the water starts to be discharged from the third-stage ion-exchange resin tower 2c, a pH value indicated by the pH meter 16 which is disposed at the discharge line 22c of the third-stage ion-exchange resin tower 2c decreases. When the pH value indicated by the pH meter 16 becomes a predetermined value, the supply of the water is terminated and the discharge switching valve 38 is switched so that the liquid 6 discharged thereafter is recovered into the liquid recovery tank 36a.

The eluting liquid recovered into the liquid recovery tank 36b and including an amino acid is treated by means of activated carbon discoloring, concentrated crystallizing and isoelectric point recrystallizing, and if necessary, recrystallizing and/or hydrating to recover a purified amino acid.

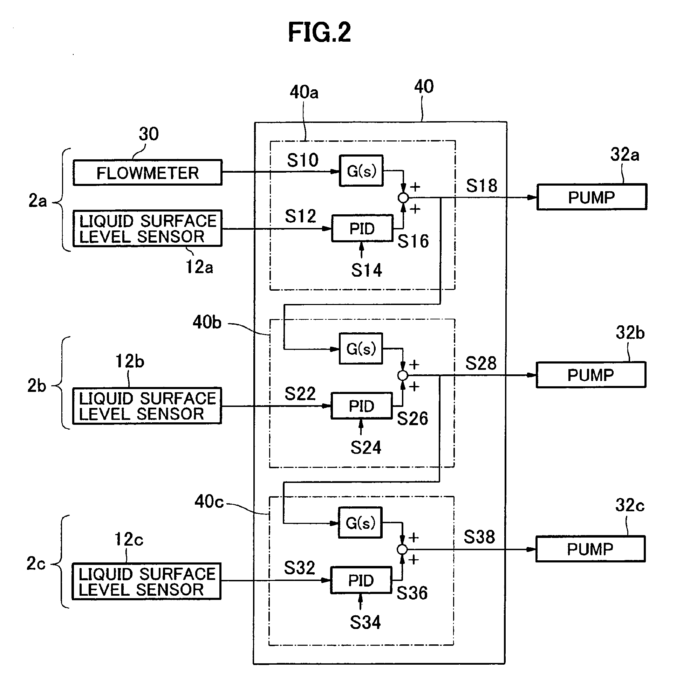

Next, referring to Figure 2, a method of controlling the liquid surface level 6a by the liquid surface level controller 40 will be explained, the liquid surface level 6a being controlled so that a state in which the ion-exchange resin is always immersed in the liquid 6 is caused. Schematically, in the ion-exchange resin towers 2a, 2b, 2c, the liquids 6 are supplied into the ion-exchange resin towers 2a, 2b, 2c through the upper portions thereof by the supply devices 20a, 20b, 20c, and then the liquids 6 are discharged from the lower portions of the ion-exchange resin towers 2a, 2b, 2c by the discharge devices 24a, 24b, 24c so that the liquid surface level 6a of the liquid layer 10 in the ion-exchange resin towers 2a, 2b, 2c comes close to the target liquid surface level. Figure 2 is a block diagram of the first embodiment of the liquid surface level control method for the ion-exchange resin towers according to the present invention.

In the control module 40a for the first-stage ion-exchange resin tower 2a, firstly, a liquid surface level signal S12 having a relation to (for example being in proportion to) the liquid surface level 6a is obtained by means of the liquid surface level sensor 12a. Then, the PID calculation is performed to obtain a liquid surface level PID operation signal S16, an input of the PID calculation being a liquid surface level signal S12, and a target value signal S14 being a signal having a relation to (for example, being in proportion to) the target liquid surface level. Further, a supply flow rate signal S10 having a relation to (for example, being in proportion to) a supply flow rate of the liquid 6 supplied into the ion-exchange resin tower from the supply source 20a is obtained, the supply flow rate signal S10 being a signal transmitted from the flowmeter 30. Then, based on the liquid surface level PID operation signal S16 and the supply flow rate signal S10, an operation signal of the discharge device corresponding to a discharge amount of the liquid to be discharged from the ion-exchange resin tower by the discharge device is determined, the operation signal being a rotational speed indication signal S18 of the pump 32a. Then, the pump 32a is operated based on the rotational speed indication signal S18.

A liquid surface level control method in the control module 40b for the second-stage ion-exchange resin tower 2b is the same as that in the control module 40a for the first-stage ion-exchange resin tower 2a except that the operation signal of the discharge device of the first-stage ion-exchange resin tower 2a, that is, the rotational speed indication signal S18 of the pump 32a is substituted for the supply flow rate signal S10. For this reason, the reference numbers indicating the signals in the first-stage ion-exchange resin tower 2a are attached to the signals in the second-stage ion-exchange resin tower 2b corresponding to the former signals except that the tens digit of the reference numbers of the latter signals is 2, and the explanation of the latter signals is omitted.

Similarly, a liquid surface level control method in the control module 40c for the third-stage ion-exchange resin tower 2c is the same as that in the control module 40a for the first-stage ion-exchange resin tower 2a except that the operation signal of the discharge device of the second -stage ion-exchange resin tower 2b, that is, the rotational speed indication signal S28 of the pump 32b is substituted for the supply flow rate signal S10. For this reason, the reference numbers indicating the signals in the first-stage ion-exchange resin tower 2a are attached to the signals in the third-stage ion-exchange resin tower 2c corresponding to the former signals except that the tens digit of the reference numbers of the latter signals is 3, and the explanation of the latter signals is omitted.

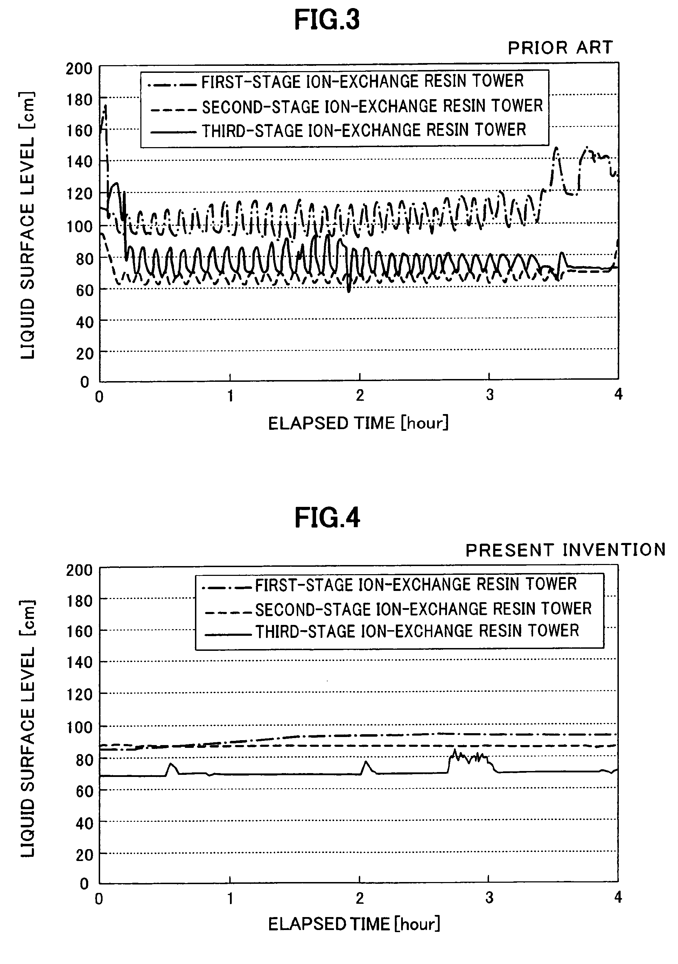

Then, referring to Figures 3 and 4, the comparison of the change in the liquid surface level in the ion-exchange resin towers according to the first embodiment of the present invention using the control method shown in Figure 2 with the changes in the liquid surface level in the conventional ion-exchange resin tower 100 using the control method shown in Figure 13 will be explained. Figure 3 is a graph showing the liquid surface levels in the conventional liquid surface level control system for the ion-exchange resin towers, while Figure 4 is a graph of the liquid surface levels in the liquid surface level control system for the ion-exchange resin towers, which is the first embodiment of the present invention.

As can be seen from Figures 3 and 4, in the conventional liquid surface level control system 100 for the ion-exchange resin tower, a range of the changes in the liquid surface levels is approximately 30 centimeters, while, in the liquid surface level control system 1 for the ion-exchange resin tower according to the first embodiment of the present invention, a range of the changes in the liquid surface levels 6a is approximately 10 centimeters and periodical changes are less than that in the conventional control system. Therefore, the liquid surface level control system 1 for the ion-exchange resin towers which is the first embodiment of the present invention allows an amplitude of the liquid surface level 6a to be reduced so that the target liquid surface level can be easily set closer to the interface level 4a, whereby the extent of diluting the unpurified amino acid solution and the eluting agent can be reduced. This allows the time required for the adsoprtion and the desportion of the amino acid in the ion-exchange resin towers 102a, 102b, 102c to be reduced and the time required for recovering the flow-through solution and the eluting liquid to be reduced, so that the process time for the ion-exchange resin towers 102a, 102b, 102c can be reduced. Further, amounts of pushed-out water and the pushing water can be reduced, so that the process time for the ion-exchange resin towers 102a, 102b, 102c can be reduced.

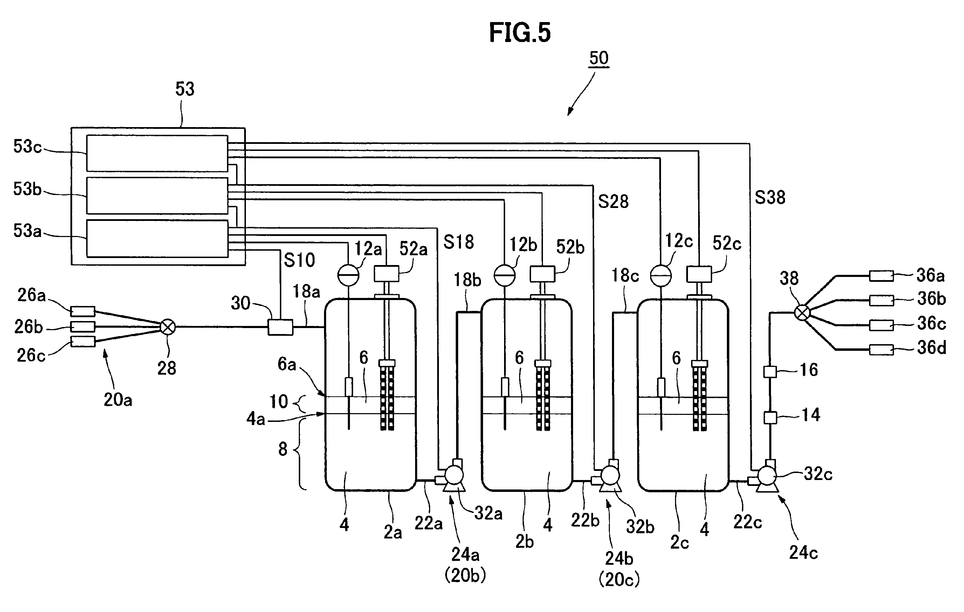

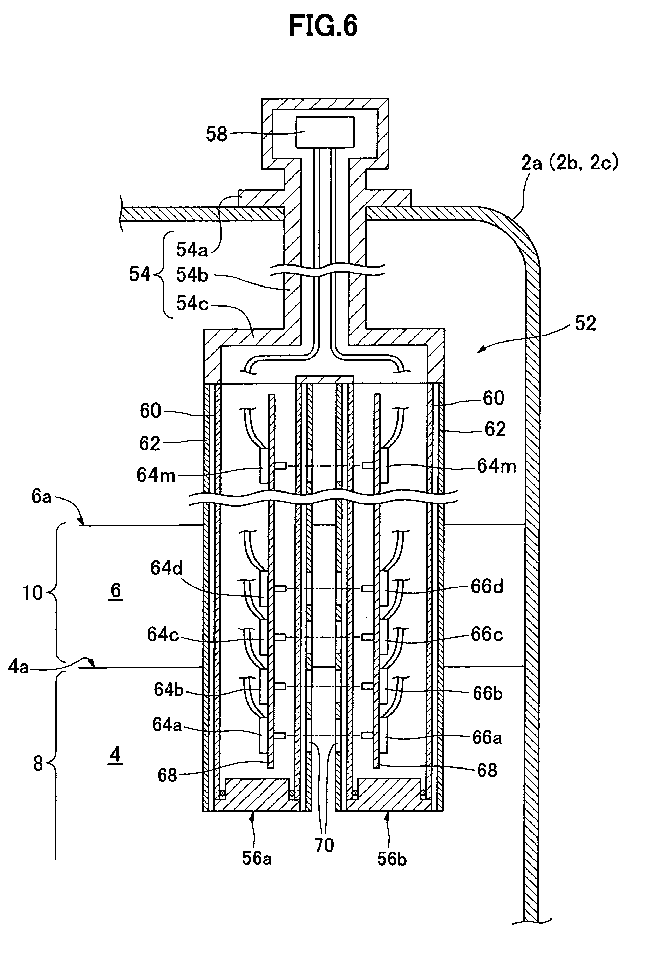

Next, referring to Figures 5 and 6, a second embodiment of the liquid surface level control system for the ion-exchange resin towers according to the present invention will be explained. Figure 5 is a schematic view showing a liquid control system for ion-exchange resin towers, which is the second embodiment of the present invention. Figure 6 is a schematic view of an interface level sensor.

As shown in Figure 5, the liquid control system 50 of the ion-exchange resin towers which is the second embodiment of the present invention comprises the same components as those of the liquid surface level control system 1 of the ion-exchange resin towers which is the first embodiment of the present invention, except that interface level sensors 52a, 52b, 52c for detecting the interface level 4a between the ion-exchange resin layer 8 and the liquid layer 10 are provided in the ion-exchange resin towers 2a, 2b, 2c and connected to a liquid surface level controller 53. For this reason, the reference numbers which are similar to those for the components in the liquid surface level control system 1 for the ion-exchange resin towers are attached to the components in the liquid surface level control system 50 for the ion-exchange resin towers corresponding to the former components, and the explanation of the latter components is omitted. The liquid surface level controller 53 includes control modules 53a, 53b, 53c for the first-stage, second-stage and third-stage ion-exchange resin towers 2a, 2b, 2c. The interface level sensor will be explained in detail later.

As shown in Figure 6, the respective interface level sensors 52a, 52b, 52c have support portions 54 fixed to the upper portions of the ion-exchange resin towers 2a, 2b, 2c, and two tubular bodies 56a, 56b extending downward from the support portion 54 through the liquid layer 10 into the ion-exchange resin layer 8.

The support portions 54 respectively include flange portions 54a fixed to the ion-exchange resin towers 2a, 2b, 2c, hollow body portions 54b extending in a vertical direction through the flange portions 54a, and hollow connecting portions 54c connecting the body portions 54b to the tubular bodies 56a, 56b. Sensor controllers 58 are respectively contained in upper portions of the body portions 54, and connected to the control modules 53a, 53b, 53c respectively corresponding to the ion-exchange resin towers 2a, 2b, 2c which the sensor controllers 58 belong to (see Figure 5).

The two tubular bodies 56a, 56b are spaced from each other and arranged in parallel relative to each other. Each of the tubular bodies 56a, 56b includes an inner tubular body 60 sealed at a lower portion thereof, and an outer tubular body 62 arranged around the inner tubular body 60.

Thirteen light emitting parts 64a-64m are arranged in a vertical direction inside the inner tubular body 60 of one of the tubular bodies 56a, while thirteen light receiving parts 66a-66m are arranged in a vertical direction inside the inner tubular body 60 of the other tubular body 56b. The inner tubular body 60 is made of a material having a light transmission property, for example, glass. Concretely, the light emitting parts 64a-64m and the light receiving parts 66a-66m are optical fibers fixed to mounting plates 68 and connected to the sensor controller 58. The light emitting parts 64a-64m and the light receiving parts 66a-66m are opposed to each other so that lights emitted from the light emitting parts 64a-64m enter the respective light receiving parts 66a-66m in a one-to-one relation. The sensor controller 58 allows light to be emitted from the light emitting parts 64a-64m and an intensity of the light to be changed. Further, the sensor controller 58 is capable of distinguishing which light receiving part(s) 66a-66m the light enters. The number of the light emitting parts and the light receiving parts is not limited to thirteen, and is arbitrarily selected according to a change in the interface and/or an accuracy of the interface level to be detected.

The outer tubular body 62 is for protecting the inner tubular body 60, is made of, for example, a stainless-steel, and has windows 70 through which light emitted from the light emitting parts pass to enter the light receiving parts.

Next, an operation of the interface level sensor will be explained. For example, when the interface level 4a is located between the light emitting/receiving parts 64b, 66b which are the second in order from the lower side and the light emitting/receiving parts 64c, 66c which are the third in such order, the light does not enter the second light receiving part 66b and the below light receiving part 66a, while the light enters the third light receiving part 66c and the above light receiving parts 66d-66m. Thus, the sensor controller 58 can determine which space between the adjacent light emitting parts 64a-64m or between the adjacent light receiving parts 66a-66m the interface level 4a is located in.

An operation of the liquid surface level control system for the ion-exchange resin towers which is the second embodiment of the present invention is similar to the operation of the liquid surface level control system for the ion-exchange resin towers which is the first embodiment of the present invention.

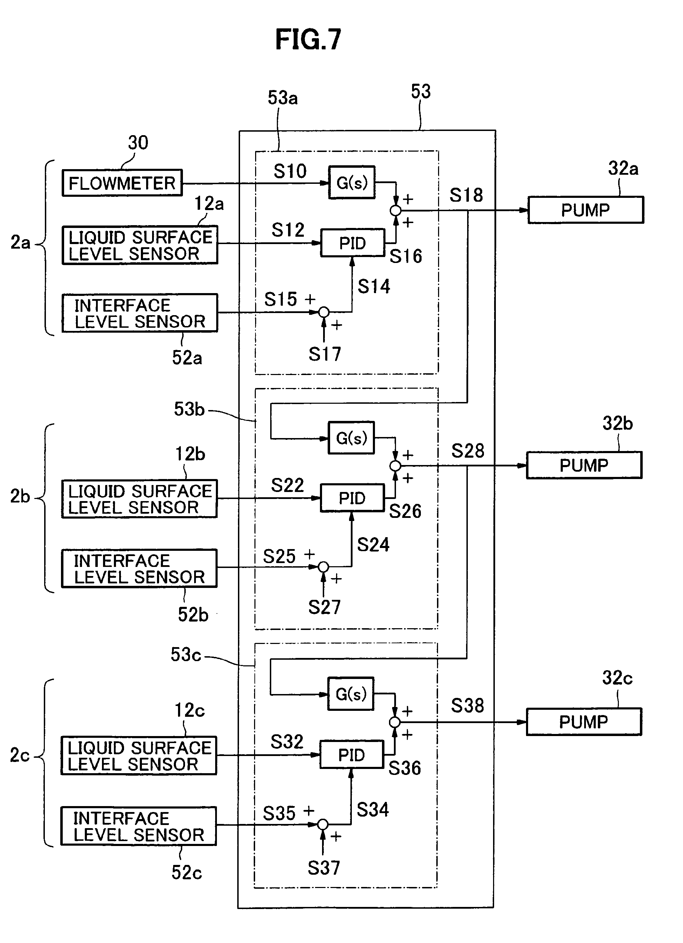

Next, referring to Figure 7, the liquid surface level control method of the ion-exchange resin towers which is the second embodiment of the present invention will be explained. Figure 7 is a block diagram of the liquid surface level control method for the ion-exchange resin towers, which is the second embodiment of the present invention.

As can be seen from Figure 7, the liquid surface level control method for the ion-exchange resin towers which is the second embodiment of the present invention is similar to the liquid surface level control method 1 for the ion-exchange resin towers which is the first embodiment of the present invention, except that an interface level signal S15, S25, S35 having a relation to (for example, being in proportion to) the interface level 4a is obtained by means of the interface level sensor 52, a target level difference signal S17, S27, S37 having a relation to (for example, being in proportion to) a target level difference between the interface level 4a and the liquid surface level 6a is obtained, and the target liquid surface level is a sum of the interface level signal S15, S25, S35 and the target level difference signal S17, S27, S37. That is, the target liquid surface level is increased and decreased according to the increase and decrease of the interface level signal S15, S25, S35, respectively. Use of the interface level sensor 52 allows the interface level 4a to be automatically measured. Further, the target liquid surface level can be set with reference to the interface level 4a.

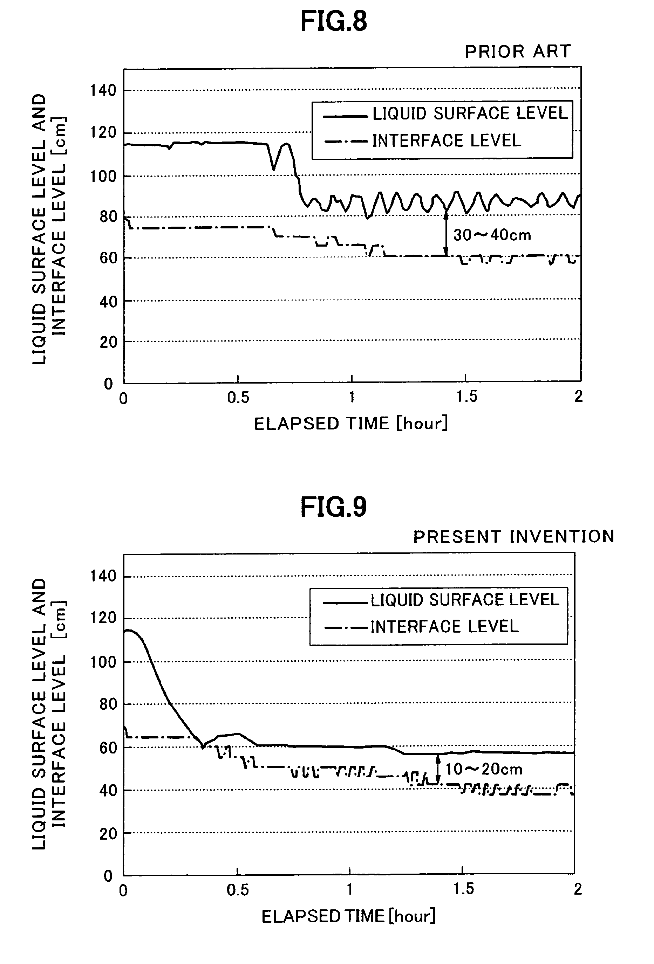

Next, referring to Figures 8-11, differences between the liquid surface level control system 50 for the ion-exchange resin towers which is the second embodiment of the present invention and the conventional liquid surface level control system 100 for the ion-exchange resin towers will be explained.

Figure 8 is a graph showing a change in the difference between the liquid surface level 106a and the interface level 104a in the conventional liquid surface level control system 100 for the ion-exchange resin towers shown in Figure 12, while Figure 9 is a graph showing a change in the difference between the liquid surface level and the interface level in the liquid surface level control system 50 for the ion-exchange resin towers which is the second embodiment of the present invention shown in Figure 5.

As can be seen from Figure 8, in the conventional liquid surface level control system 100 for the ion-exchange resin towers, a difference between the liquid surface level 106a and the interface level 104a, that is, a thickness of the liquid layer 110 in a vertical direction is 30-40 centimeters, while in the liquid surface level control system 50 for the ion-exchange resin towers which is the second embodiment of the present invention, a difference between the liquid surface level 6a and the interface level 4a, that is, a thickness of the liquid layer 10 in a vertical direction is 10-20 centimeters, which is less than that in the former system. Thus, the liquid surface level control system 50 for the ion-exchange resin towers which is the second embodiment of the present invention allows the target liquid surface level to come closer to the interface level 4a so that an extent of diluting the unpurified amino acid solution and the eluting agent can be reduced. Further, a time required for the adsorption and the desorption of the amino acid in the ion-exchange resin towers 102a, 102b, 102c can be reduced and a time required for recovering the flow-through solution and the eluting liquid can be reduced so that the process time of the ion-exchange resin towers 102a, 102b, 102c can be reduced. Further, the amounts of the pushed-out water and the pushing water can be reduced so that the process time of the ion-exchange resin towers 102a, 102b, 102c can be reduced. In connection with Figure 8, the interface level 4a in the liquid surface level control system 100 for the ion-exchange resin towers was visually measured through windows provided in the ion-exchange resin towers.

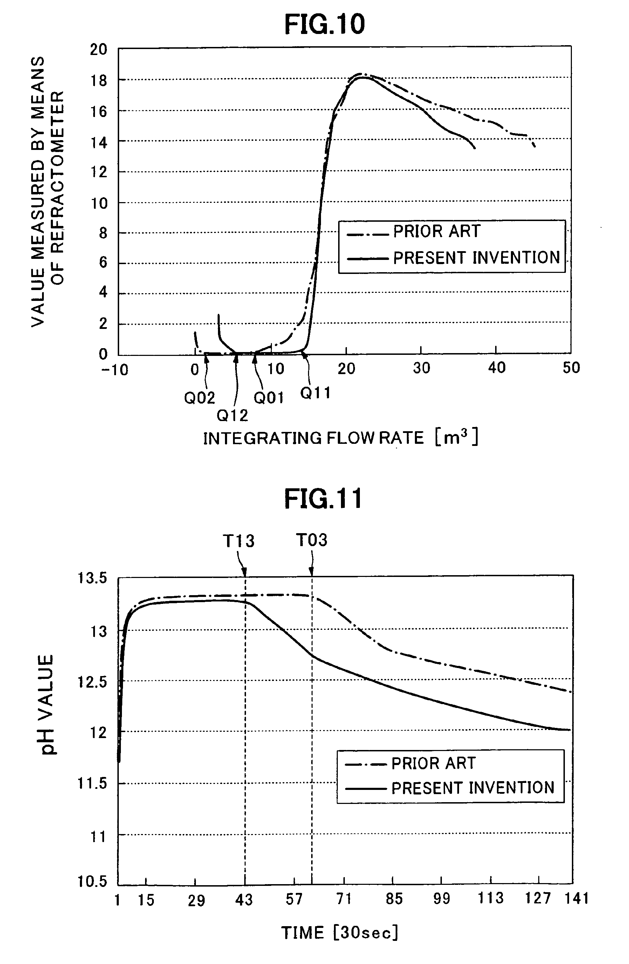

Figure 10 is a graph showing a timing of starting recovery of the eluting liquid in the conventional liquid surface level control system 100 with reference to an integrating flow rate. A horizontal axis indicates an integrating discharge flow rate of the third-stage ion-exchange resin tower from the beginning of the elution process. Further, in Figure 10, the line representing the liquid surface level control system of the present invention is shifted so that peak values measured by means of the refractometer 14 in the present liquid level control system and the conventional liquid control system 100 overlap each other at the same timing. As can be seen from Figure 10, in the conventional liquid surface level control system 100, the value measured by means of the refractometer 14 gradually increases and starts the recovery of the eluting liquid at a timing Q01, while in the liquid surface level control system 50 for the ion-exchange resin towers according to the present invention, the value measured by means of the refractometer 14 rapidly increases and starts the recovery of the eluting liquid at a timing Q11 which is later than the timing Q01. Thus, it can be found from Figure 10 that, in the conventional liquid surface level control system 100, when the eluting agent starts to be supplied, the eluting agent is mixed with the water and then diluted so that a lot of water is contained in the recovered eluting liquid from the timing Q01.

As to a timing Q02, Q12 of supplying the eluting agent with respect to the timing at which the value measured by means of the refractometer 14 becomes a peak (bottom in Figure 10), the timing Q12 in the liquid surface level control system 50 for the ion-exchange resin towers according to the present invention is later than the timing Q02 in the conventional liquid surface level control system 100 for the ion-exchange resin towers. These timings Q02, Q12 indicate that the water is contained in the ion-exchange resin tower before the eluting agent is supplied and an amount of the water is small. Thus, it can be found from Figure 10 that an amount of the water supplied in the liquid surface level control system 50 for the ion-exchange resin towers according to the present invention is less than an amount of the water supplied in the conventional liquid surface level control system 100. That is, it has been confirmed that the process time of the ion-exchange resin towers 2a, 2b, 2c in the liquid surface level control system therefor can be reduced and the amount of the used water can be reduced.

Figure 11 is a graph showing a timing of terminating the supply of the water with which the eluting agent is replaced after the eluting agent has been supplied. In the conventional liquid surface level control system 100 for the ion-exchange resin towers, a pH value of the pH meter 16 decreases and the supply of the water is terminated at a timing T03, while in the liquid surface level control system 50 for the ion-exchange resin towers according to the present invention, a pH value decreases and the supply of the water is terminated at a timing T13 which is earlier than the timing T03. Thus, it has been confirmed that the process time in the liquid surface level control method for the ion-exchange resin towers can be reduced.

Although the embodiments of the present invention have been explained, the present invention is not limited to the above-stated embodiments and various modifications thereof are possible so that it is apparent that such modifications could fall within the scope of the present invention recited in the claims.

In the above-stated embodiment, the liquid surface level control system for the ion-exchange resin towers has been explained, the towers being three ion-exchange resin towers 2a, 2b, 2c arranged in series, but the number of the ion-exchange resin towers is arbitrary and the ion-exchange resin towers may be connected in series in an annular form. When the ion-exchange resin towers are arranged in such an annular form, the liquid may be recovered by providing liquid passages downstream of the discharge device of each of the ion-exchange resin towers, the passages being switchably communicated with the liquid recovery tanks 36a, 36b, 36c.

In the above-stated embodiments, the supply flow rate signal is the signal of the flow meter and the operation signal of the discharge device is the rotational speed indication signal of the pump. However, these signals may be any signals indicating the change in the supply flow rate or the discharge flow rate, for example, a signal obtained from a valve with an actuator and a signal obtained from a flow meter if it is provided.

In the above-described embodiment, although the light emitting parts and the light receiving parts are the optical fibers, they may be any other optical parts which can emit or receive a light.

In the above-described embodiments, the liquid surface level control systems 1, 50 for the ion-exchange resin towers used for separating and extracting the purified amino acid solution from the unpurified amino acid solution are illustratively explained. However, the liquid surface level control method and the liquid surface level control system according to the present invention may be used for other applications, for example, an application of purifying a sugar group if a dilution in the application can be prevented, and an application of removing a saline in water if a process time in the application can be reduced.

### BRIEF DESCRIPTION OF THE DRAWINGS

Figure 1 is a schematic view of a liquid surface level control system for ion-exchange resin towers, which is a first embodiment of the present invention;
Figure 2 is a block diagram of a control method for the liquid surface level control system for the ion-exchange resin towers, which is the first embodiment of the present invention;
Figure 3 is a graph of changes in the liquid surface levels in the conventional liquid surface level control system for ion-exchange resin towers;
Figure 4 is a graph of changes in the liquid surface levels in the liquid surface level control system for ion-exchange resin towers, which is the first embodiment of the present invention;
Figure 5 is a schematic view showing a liquid surface level control system for ion-exchange resin towers according to a second embodiment of the present invention;
Figure 6 is a schematic view of an interface level sensor;
Figure 7 is a block diagram of a liquid surface level control method for the ion-exchange resin towers, which is the second embodiment of the present invention;
Figure 8 is a graph showing a change in the difference between the liquid surface level and the interface level in the conventional liquid surface level control system for the ion-exchange resin towers;
Figure 9 is a graph showing a variation in the difference between the liquid surface level and the interface level in the liquid surface level control system for the ion-exchange resin towers according to the second embodiment of the present invention;
Figure 10 is a graph showing a timing of starting recovery of the eluant;
Figure 11 is a graph showing a timing of terminating the supply of the water after the eluant has been supplied;
Figure 12 is a schematic view of a conventional liquid surface level control system for ion-exchange resin towers; and
Figure 13 is a block diagram of the conventional liquid surface level control method for the ion-exchange resin towers.

## Claims

1. A liquid surface level control method of controlling a liquid surface level in at least one ion-exchange resin tower comprising steps of:
supplying a liquid into an ion-exchange resin tower through an upper portion thereof by a supply device; and
discharging the liquid from a lower portion of the ion-exchange resin tower by a discharge device so that a liquid surface level of a liquid layer located on an ion-exchange resin layer in the ion-exchange resin tower comes close to a target liquid surface level; said discharging step comprising steps of:
obtaining a liquid surface level signal corresponding to the liquid surface level by a liquid surface level sensor;
performing a PID calculation to obtain a liquid surface level PID operation signal, an input of the PID calculation being the liquid surface level signal and a target value of the PID calculation being a target liquid surface level;
obtaining a supply flow rate signal corresponding to a supply flow rate of the liquid supplied into the ion-exchange resin tower by the supply device;
determining an operation signal of the discharge device corresponding to a discharge amount of the liquid to be discharged from the ion-exchange resin tower by the discharge device based on the liquid surface level PID operation signal and the supply flow rate signal; and
operating said discharge device based on the operation signal of the discharge device.

2. The liquid surface level control method according to claim 1,
wherein the at least one ion-exchange resin tower includes a first-stage ion-exchange resin tower and a second-stage ion-exchange resin tower which are connected in series, and the discharge device of the first-stage ion-exchange resin tower is the supply device of the second-stage ion-exchange resin tower, and
wherein said step of obtaining the supply flow rate signal in the second-stage ion-exchange resin tower is the same as said step of obtaining the operation signal of the discharge device determined in the first-stage ion-exchange resin tower.

3. The liquid surface level control method according to claim 1 or 2,
wherein said discharging step further includes steps of obtaining an interface level signal corresponding to an interface level between the ion-exchange resin layer and the liquid layer by means of an interface level sensor; and increasing and decreasing the target liquid surface level according to an increase and decrease of the interface level signal, respectively.

4. A liquid surface level control system for controlling a liquid surface level in an ion-exchange resin tower, comprising:
at least one ion-exchange resin tower;
an ion-exchange resin layer disposed in said ion-exchange resin tower;
a liquid layer formed on said ion-exchange resin layer by a liquid supplied into said ion-exchange resin tower so as to immerse said ion-exchange resin layer;
a liquid surface level sensor for detecting a liquid surface level of said liquid layer;
a supply device connected to an upper portion of said ion-exchange resin tower for supplying the liquid into said ion-exchange resin tower;
a discharge device connected to a lower portion of said ion-exchange resin tower for discharging the liquid from said ion-exchange resin tower; and
a liquid surface level controller connected to said liquid surface level sensor, said supply device, and said discharge device,
wherein said liquid controller obtains a supply flow rate signal corresponding to a supply flow rate of the liquid supplied into said ion-exchange resin tower based on a signal received from said supply device; performs a PID calculation to obtain a liquid surface level PID operation signal, an input of the PID calculation being a signal of the liquid surface level detected by said liquid surface level sensor, and a target value of the PID calculation being a target liquid surface level; determines an operation signal of said discharge device corresponding to a discharge amount of the liquid to be discharged from said discharge device based on said liquid surface level PID operation signal and said supply flow rate signal; and operates said discharge device based on the operation signal of said discharge device.

5. The liquid surface level control system according to claim 4, further comprising an interface level sensor for detecting an interface level between said ion-exchange resin layer and said liquid layer,
wherein said liquid controller further obtains an interface level signal corresponding to the interface level, and increases and decreases the target liquid surface level according to an increase and decrease of the interface level signal, respectively.

6. An interface level sensor for detecting an interface level between an ion-exchange resin layer immersed in a liquid and a liquid layer located on the ion-exchange resin layer, comprising:
two tubular bodies extending through the liquid layer into the ion-exchange resin layer, the tubular bodies being sealed at their lower portions spaced from each other, and made of a material with a light transmittance property,
a plurality of light emitting parts arranged in a vertical direction inside one of the tubular bodies;
a plurality of light receiving parts arranged in a vertical direction inside the other of the tubular bodies, said light receiving parts being opposed to said light emitting parts in a one-to-one relation so that light emitted from said light emitting parts enters said respective light receiving parts; and
a sensor controller connected to said light emitting parts and said light receiving parts,
wherein said control sensor determines which space between the adjacent light emitting parts/light receiving parts the interface level is located in.

7. The interface level sensor according to claim 6, further comprising an outer tubular body arranged around said tubular bodies, said outer tubular body including a window through which light passes, the light being emitted from said light emitting part and received by said light receiving part.
